# EUROPEAN PATENT APPLICATION

(11) **EP 1 849 815 A1**
(43) Date of publication of application: **31.10.2007**
(21) Application number: 06713469.2
(22) Date of filing: 10.02.2006
(51) Int. Cl.: C08J 3/09

(54) **METHOD FOR PRODUCING INTRINSICALLY CONDUCTIVE POLYMER DISPERSION IN ORGANIC SOLVENT**

(30) Priority: 16.02.2005 JP 2005039086
(71) Applicant: Nissan Chemical Industries, Ltd., Chiyoda-ku, Tokyo 101-0054 (JP)
(72) Inventor: ISAJI, Tadayuki, c/o Nissan Chemical Ind. Ltd., Funabashi-shi, Chiba 2748507 (JP); FUJIMOTO, Osamu, c/o Nissan Chemical Ind. Ltd., Sodegaura-shi, Chiba, 2990266 (JP)
(74) Representative: Stoner, Gerard Patrick
(86) International application number: PCT/JP2006/302326
(87) International publication number: WO 2006/087969

(57) **Abstract**

A method for producing an organic solvent dispersion of an intrinsically conductive polymer which comprises a step of deionizing an aqueous colloidal dispersion of an intrinsically conductive polymer by the passing of liquid, thereby clearing the intrinsically conductive polymer of cations adhering thereto, and a subsequent step of substitu water in the aqueous colloidal dispersion by an organic solvent. This method permits easy production of an organic solvent dispersion of an intrinsically conductive polymer which can be applied to various uses as electrode materials, antistatic agents, UV light absorbers, heat ray absorbers, electromagnetic wave absorbers, sensors, electrolyte for electrolytic capacitors, and electrodes for secondary batteries.

## Description

### TECHNICAL FIELD

The present invention relates to a method for production of organic solvent dispersion of intrinsically conductive polymer.

### BACKGROUND ART

Aromatic conductive polymers, such as polyaniline, polythiophene, and plypyrrole, seem useful because of their good stability and high conductivity but they are limited in the field of application because of their poor processability due to insolubility in organic solvents.
According to a recent report, it is possible to improve processability by dispersing the conductive polymer into water or an organic solvent such as aromatic solvent. (See Patent Document Nos. 1 and 2.)
Making the above-mentioned conductive polymer into a dispersion involves its conversion into an intrinsically conductive polymer by addition of a dopant and subsequent dispersion in water or a mixture of water and hydrophilic solvent. However, the complexity of these steps prevents the conductive polymer from being used in the form of coating material.

One way proposed to address this problem is by solvent substitution. (See Patent Document Nos. 3 and 4.) The method disclosed in Patent Document No. 3 is very complex because solvent substitution needs vigorous stirring.
There is a simple method for solvent substitution that involves deionization with an ion-exchange material. This method, however, is incapable of removing cations strongly adhered to the surface of particles of intrinsically conductive polymer, and hence it merely gives an unstable dispersion (with a water content no less than 1 wt%) of intrinsically conductive polymer in an organic solvent.
(See Patent Document No. 4.)
The above-mentioned problems encountered in the prior art technology have to be solved to enlarge the application field of the conductive polymer, and hence there is a demand for a simple method for preparing an organic solvent dispersion of an intrinsically conductive polymer.

[Patent Document 1]
   Japanese Patent Laid-open No. Hei 7-90060
[Patent Document 2]
   JP-A-H2-500918
[Patent Document 3]
   JP-A-2004-532292
[Patent Document 4]
   JP-A-2004-532298

### DISCLOSURE OF THE INVENTION

### PROBLEMS TO BE SOLVED BY THE INVENTION

The present invention was completed in view of the foregoing. It is an object of the present invention to provide a simple method for preparing an organic solvent dispersion of an intrinsically conductive polymer which can be applied to various uses as electrode materials, antistatic agents, UV light absorbers, heat ray absorbers, electromagnetic wave absorbers, sensors, electrolyte for electrolytic capacitors, and electrodes for secondary batteries.

### MEANS FOR SOLVING THE PROBLEMS

In order to solve the above-mentioned problems, the present inventors carried out a series of investigations, which led to the finding that dispersion of an intrinsically conductive polymer into an organic solvent is possible if its aqueous colloidal dispersion undergoes deionization by a passing of liquid and subsequent solvent substitution.
The present invention is directed to the following aspects (1) to (11).
(1) A method for producing an organic solvent dispersion of an intrinsically conductive polymer which includes a step of deionizing an aqueous colloidal dispersion of an intrinsically conductive polymer by the passing of liquid, thereby clearing the intrinsically conductive polymer of cations adhering thereto, and a subsequent step of substituting water in the aqueous colloidal dispersion by an organic solvent.
(2) The method for producing an organic solvent dispersion of an intrinsically conductive polymer as defined in the first aspect, wherein deionization is accomplished by ion exchange.
(3) The method for producing an organic solvent dispersion of an intrinsically conductive polymer as defined in the first aspect, wherein the aqueous colloidal dispersion of an intrinsically conductive polymer undergoes ultrafiltration before deionization.
(4) The method for producing an organic solvent dispersion of an intrinsically conductive polymer as defined in the first aspect, wherein solvent substitution is accomplished in such a way as to keep the solid contents in a range of 0.05 to 10.0 wt%.
(5) The method for producing an organic solvent dispersion of an intrinsically conductive polymer as defined in the first aspect, wherein solvent substitution is accomplished in such a way as to reduce the water content below 1%.
(6) The method for producing an organic solvent dispersion of an intrinsically conductive polymer as defined in the first aspect, wherein solvent substitution is accomplished by slowly adding said organic solvent to said aqueous colloidal dispersion, thereby removing water.
(7) The method for producing an organic solvent dispersion of an intrinsically conductive polymer as defined in the first aspect, wherein said organic solvent is an alcohol with a carbon number of 1 to 3 or N-methylpyrrolidone.
(8) The method for producing an organic solvent dispersion of an intrinsically conductive polymer as defined in the first aspect, wherein said intrinsically conductive polymer is doped polyaniline, doped polythiophene, a mixture thereof or a copolymer thereof.
(9) An organic solvent dispersion of an intrinsically conductive polymer which is obtained by the method defined in any of the first to eighth aspects.
(10) An organic solvent dispersion of an intrinsically conductive polymer in which the water content is less than 1 wt%.
(11) The organic solvent dispersion of an intrinsically conductive polymer as defined in the eleventh aspect wherein said intrinsically conductive polymer is doped polyaniline, doped polythiophene, a mixture thereof or a copolymer thereof.

### EFFECT OF THE INVENTION

The method according to the present invention permits easy production of an organic solvent dispersion of an intrinsically conductive polymer, with its water content reduced below 1%.
The organic solvent dispersion of an intrinsically conductive polymer which is produced by the method of the present invention has a simple composition and finds use as a coating material which gives a thin film having such properties as electrical conductivity and/or absorption of heat rays (infrared rays) characteristic of intrinsically conductive polymers. Therefore, it will find use in broad application fields including electrode material, antistatic agent, UV light absorber, heat ray absorber, electromagnetic wave absorber, sensors, electrolyte for electrolytic capacitors, and electrodes for secondary batteries. Thus the present invention will enlarge the application fields of conductive polymers.

### BEST MODE FOR CARRYING OUT THE INVENTION

A detailed description of the invention will be given in the following.
According to the present invention, the method for producing an organic solvent dispersion of an intrinsically conductive polymer includes two steps. The first step is deionization of an aqueous colloidal dispersion of an intrinsically conductive polymer by the passing of liquid. This step is intended to clear the intrinsically conductive polymer of cations adhering thereto. The second step that follows the first step is solvent substitution which is designed to substitute water in the aqueous colloidal dispersion by an organic solvent.
The term "intrinsically conductive polymer" as used in the present invention denotes those polymers which are in the form of polyradical cationic salt or polyradical anionic salt that result from doping and hence which exhibit electrical conductivity by themselves.

Intrinsically conductive polymers suitable for the present invention are not specifically restricted; they include any known polymers in doped form of aniline, pyrrole, thiophene, acetylene, etc., and derivatives thereof. They may be used alone or in combination with one another. The dopants for the intrinsically conductive polymers are exemplified by sulfonic acids (such as polystyrenesulfonic acid, methanesulfonic acid, alkylbenzenesulfonic acid, and camphor sulfonic acid), carboxylic acids (such as acetic acid), hydrogen halides (such as hydrochloric acid, and hydrobromic acid).

Desirable samples of the intrinsically conductive polymer may be prepared by the method disclosed in Japanese Patent Laid-open No. Hei 7-90060 and JP-A-H2-500918. Polythiophene (typically (3,4-ethylenedioxythiophene), polyaniline, a mixture thereof and a copolymer thereof, which are commercially available in the form of aqueous colloidal dispersion, are also desirable. The polyaniline, a mixture of polyaniline and polythiophen or a copolymer thereof are most suitable because their aqueous colloidal dispersion are composed of very small particles.

The aqueous colloidal dispersion of the intrinsically conductive polymer contains a large amount of free ions originating from excess dopant (such as sulfonic acid) and also free ions (such as ammonium ions, potassium ions, sulfate ions, etc.) originating from decomposition products of salts (such as ammonium persulfate and potassium persulfate) used for production. Also, such cations as ammonium ions and potassium ions are strongly adhered to the dopant portion of the particles of the intrinsically conductive polymer in the dispersion.
Consequently, it is necessary to remove these free ions and excess dopant before the intrinsically conductive polymer is dispersed into an organic solvent so that they will not adversely affect stable dispersion.

### [Step for deionization]

The present invention involves a step for deionization which is intended to remove free ions, excess dopant, and cations adhering to the intrinsically conductive polymer.
A method for deionization is not specifically restricted, however, ion exchange is a preferred method for deionization because it effectively removes cations strongly adhering to the intrinsically conductive polymer. This object is achieved by bringing an aqueous colloidal dispersion of the intrinsically conductive polymer into contact with a cation exchange resin and/or an anion exchange resin. This step should be carried out at 0°C to 100°C, preferably at 5°C to 50°C in consideration of the heat resistance and workability of the ion exchange resin.

The cation exchange resin is not specifically restricted; it may be selected from commercial ones. A preferred example is hydrogen form strong acid cation exchange resin, which is available under a trade name of Amberlite IR-120B (from Organo). The anion exchange resin is not specifically restricted either; it may be selected from commercial ones. A preferred example is hydroxyl group form strong base anion exchange resin, which is available under a trade name of Amberlite IRA-410 (from Organo).

There are not specific restrictions on the method of bringing an aqueous colloidal dispersion of the intrinsically conductive polymer into contact with an ion exchange resin so long as the method can clear the intrinsically conductive polymer of cations adhering thereto. Removal of cations is accomplished most effectively by the passing of liquid, that is, by passing an aqueous colloidal dispersion of the intrinsically conductive polymer through a column filled with an ion exchange resin. A space velocity of about 1 to 10 per hour is adequate for this process.

Deionization is accomplished more effectively by employing both a cation exchange resin and an anion exchange resin than by employing only either of them. The order of contact with the two ion exchange resins is not specifically restricted; however, it is desirable to make contact with a cation exchange resin and then with an anion exchange resin because the aqueous colloidal dispersion increases in pH after anion exchange, with the result that the intrinsically conductive polymer loses its dopant and decreases in conductivity.

The aqueous colloidal dispersion may contain about 0.001 to 10.0 wt% of solids when it undergoes deionization by means of ion exchange. However, the solid contents should preferably be about 0.05 to 5.0 wt% in view of workability and productivity. In the case where the intrinsically conductive polymer is polyaniline, a mixture of polyaniline and polythiophen or a copolymer thereof, the aqueous colloidal dispersion should preferably have a pH value lower than 2 if it contains 1.5 wt% of solids.
There is the possibility that the aqueous colloidal dispersion loses a portion of dopant (necessary for conductivity) as the result of deionization by ion exchange. This may give rise to an instance where it is necessary to replenish dopants after deionization.

### [Step for filtration]

The aqueous colloidal dispersion can be purified more if deionization (mentioned above) is preceded by ultrafiltration which effectively removes free ions and excess dopant.
Ultrafiltration may be accomplished by using an ultrafiltration membrane or tube. The temperature for this procedure should preferably be about 0 to 80°C, which is low enough for adequate ultrafiltration. Continuous or intermittent water supply during ultrafiltration is desirable to ensure complete removal of free ions and excess dopant.

The ultrafiltration membrane or tube used in this step is not specifically restricted in its molecular weight cutoff. The one with a molecular weight cutoff of 10,000 to 200,000 is desirable. Ultrafiltration with an excessively small molecular weight cutoff takes a very long time; ultrafiltration with an excessively large molecular weight cutoff also permits the intrinsically conductive polymer to escape.
Ultrafiltration should preferably be performed on an aqueous colloidal dispersion of intrinsically conductive polymer containing about 0.001 to 10.0 wt% of solids. Concentrations of about 0.05 to 5.0 wt% is more desirable for good workability and productivity. Duration of filtration is usually 1 to 50 hours, although not specifically restricted.
In the case where the intrinsically conductive polymer is polyaniline, the aqueous colloidal dispersion should preferably have a pH value lower than 3 if it contains 3 wt% of solids. In the case where the intrinsically conductive polymer is poly-3,4-ethylenedioxythiophene, the aqueous colloidal dispersion should preferably have a pH value lower than 3 if it contains 1.3 wt% of solids.

The aqueous colloidal dispersion of intrinsically conductive polymer decreases in pH value after it has undergone ultrafiltration. It further decreases in pH value after it has undergone deionization. Its pH value should preferably be lower than 2 if the intrinsically conductive polymer is polyaniline and the solid contents is 3 wt%, and lower than 2.5 if the intrinsically conductive polymer is poly-3,4-ethylenedioxythiophene and the content of solids is 1 wt%.

### [Step for solvent substitution]

The aqueous colloidal dispersion of intrinsically conductive polymer, which has undergone deionization as mentioned above, subsequently undergoes solvent substitution, so that it is converted into an organic solvent dispersion of intrinsically conductive polymer.
Solvent substitution may be accomplished in any manner; for example, by removing water from the aqueous colloidal dispersion under normal pressure or reduced pressure and then adding an organic solvent to it, by adding an organic solvent to the aqueous colloidal dispersion and then removing water from it under normal pressure or reduced pressure, or by removing water while adding by slow degrees an organic solvent to the aqueous colloidal dispersion under normal pressure or reduced pressure. The last method is most desirable to minimize the water content in the organic solvent dispersion of intrinsically conductive polymer.

Organic solvents to be used for solvent substitution are not specifically restricted; however, they should preferably be hydrophilic ones, which include, for example, alcohols (such as methanol, ethanol, 1-propanol, 2-propanol, 1-butanol, 1-hexanol, and 1-octanol), ketones (such as acetone, methyl ethyl ketone, and diethyl ketone), amides (such as formamide, dimethylformamide, N-methylacetamide, N,N-dimethylacetamide, and N-methylpyrrolidone [NMP for short hereinafter]), and ethers (such as diethyl ether).
Most suitable among these organic solvents are C₁₋₃ alcohols (such as methanol, ethanol, 1-propanol, and 2-propanol) and NMP. They may be used alone or in combination with one another.

Solvent substitution should be carried out at an adequate temperature which depends on the boiling point of the solvent to be used. It should proceed under reduced pressure at as low a temperature as possible so that it will not deteriorate the intrinsically conductive polymer. The dispersion which undergoes solvent substitution should preferably contain about 0.05 to 10.0 wt% of solids for good workability and productivity. If water is to be removed while an organic solvent is being added slowly, it is desirable to add the organic solvent at an adequate rate which keeps the solid contents in the above-mentioned range.

A series of procedures mentioned above yields an organic solvent dispersion of an intrinsically conductive polymer which has a greatly reduced water content less than 2%, even less than 1%, which has never been attained by conventional processes.
After the above-mentioned steps, the resulting organic solvent dispersion of an intrinsically conductive polymer should preferably undergo wet milling to improve its dispersibility. Wet milling may be accomplished by using any of sand grinder, ball mill, disper, colloid mill, ultrasonic homogenizer, and high-pressure homogenizer. The last two are desirable for easy handling, short processing time, and good dispersibility.
The method of the present invention yields an organic solvent dispersion of an intrinsically conductive polymer which has a very low water content. This product fully exhibits good electrical conductivity and heat ray (infrared ray) absorption which are characteristic of intrinsically conductive polymers. Therefore, it will find use as electrode material, antistatic agent, UV light absorber, heat ray absorber, electromagnetic wave absorber, sensor, electrolyte for electrolytic capacitor, electrode for secondary batteries, and the like.

### EXAMPLES

The invention will be described below in more detail with reference to Examples and Comparative Examples, which are not intended to restrict the scope thereof. Physical properties in the examples were measured as follows.
[1] pH
   Measured at 25°C by using a digital pH meter "HM-50V", from Toa Dempa Kogyo.
[2] Electrical conductivity
   Measured at 25°C by using a conductivity meter "CM-30G", from Toa Dempa Kogyo.
[3] Surface resistivity
   Measured by using "Loresta IP TCP-T250", from Mitsubishi Chemical.
[4] Viscosity
   Measured at 25°C by using a rotational viscometer, EL type, from TOKIMEC.
[5] Particle diameter
   Measured by using "Microtrack UPA250", from Microtrack.
[6] Water content
   Measured by using a Karl Fisher moisture meter "MKA-3p", from Kyoto Denshi Kogyo.

### Example 1

The first step started with ultrafiltration of a commercial product (2.00 kg) of aqueous colloidal dispersion of polyaniline "D1012W-1" (from ORMECON) containing 3.9 wt% of solids and having pH 2.7 and conductivity of 15.6 mS/cm. Ultrafiltration was performed at 20°C by using 131 kg of water through a membrane (made by Millipore) with a molecular weight cutoff of 100,000. Thus there was obtained 1.29 kg of filtered aqueous dispersion of polyaniline, which contained 4.93 wt% of solids and had pH 1.8 and conductivity of 8.4 mS/cm. After the content of solids had been adjusted to 3.1 wt%, filtered aqueous dispersion had pH 2.2 and conductivity of 5.0 mS/cm.
In the second step, deionization was performed by passing 314 g of the filtered aqueous colloidal dispersion of polyaniline through a column (45 mm in diameter) filled with 300 mL of hydrogen form strong acid cation exchange resin (IR-120B, from Organo), at 20°C and a space velocity of 10 per hour. Thus there was obtained 575 g of cation-exchanged aqueous colloidal dispersion of polyaniline, which contained 2.7 wt% of solids and had pH 1.6 and conductivity of 8.3 mS/cm.

In the third step, 86 g of the cation-exchanged aqueous colloidal dispersion was placed in an evaporator (with its internal pressure kept at 60 Torr) heated by an external heater at 75°C. For solvent substitution, 1.2 L of ethanol was slowly added to the evaporator so that water was substituted by ethanol. Thus there was obtained 74 g of ethanol dispersion of polyaniline, which contained 3.2 wt% of solids and 0.26 wt% of water and had a viscosity of 3.3 mPa·s and a particle diameter of 214 nm. (The solid contents was kept at 2 to 4 wt% during solvent substitution.) The resulting ethanol dispersion was applied onto a glass plate by using an applicator (which formed a wet film with a thickness of 25 µm). After heating at 110°C for 10 minutes, there was obtained a dry film which had a surface resistivity of 3.5×10⁵ Ω/□.

### Example 2

Solvent substitution was performed as follows on 85 g of the cation-exchanged aqueous colloidal dispersion prepared in Example 1. The sample was placed in an evaporator (with its internal pressure kept at 60 Torr) heated by an external heater at 75°C. The evaporator was slowly given 1.1 L of 2-propanol so that water was removed and substituted by 2-propanol. Thus there was obtained 73 g of 2-propanol dispersion of polyaniline, which contained 3.2 wt% of solids and 0.14 wt% of water and had a viscosity of 11.3 mPa·s and a particle diameter of 419 nm. (The solid contents was kept at 2 to 4 wt% during solvent substitution.) The resulting 2-propanol dispersion was applied onto a glass plate by using an applicator (which formed a wet film with a thickness of 25 µm). After heating at 110°C for 10 minutes, there was obtained a dry film which had a surface resistivity of 4.5×10⁵ Ω/□.

### Example 3

Solvent substitution was performed as follows on 86 g of the cation-exchanged aqueous colloidal dispersion prepared in Example 1. The sample was placed in an evaporator (with its internal pressure kept at 60 Torr) heated by an external heater at 75°C. The evaporator was slowly given 1.0 L of 1-propanol so that water was removed and substituted by 1-propanol. Thus there was obtained 70 g of 1-propanol dispersion of polyaniline, which contained 3.1 wt% of solids and 0.11 wt% of water and had a viscosity of 5.8 mPa·s and a particle diameter of 215 nm. (The solid contents was kept at 2 to 4 wt% during solvent substitution.) The resulting 1-propanol dispersion was applied onto a glass plate by using an applicator (which formed a wet film with a thickness of 25 µm). After heating at 110°C for 10 minutes, there was obtained a dry film which had a surface resistivity of 1.7×0⁵ Ω/□.

### Example 4

Deionization was performed on 300 g of aqueous colloidal dispersion of polyaniline "D1012W-1" (from ORMECON) containing 3.9 wt% of solids and having pH 2.7 and conductivity of 1.5 mS/cm, by passing through a column filled with 300 mL of hydrogen form strong acid cation exchange resin (IR-120B, from Organo), at 20°C and a space velocity of 10 per hour. Thus there was obtained 427 g of cation-exchanged aqueous colloidal dispersion of polyaniline, which contained 2.5 wt% of solids and had pH 1.3 and conductivity of 20.7 mS/cm.
In the next step, 100 g of the cation-exchanged aqueous colloidal dispersion (obtained as mentioned above) was placed in an evaporator (with its internal pressure kept at 60 Torr) heated by an external heater at 75°C. For solvent substitution, 1.3 L of 1-propanol was slowly added to the evaporator so that water was substituted by 1-propanol. Thus there was obtained 70 g of 1-propanol dispersion of polyaniline, which contained 3.3 wt% of solids and 0.09 wt% of water and had a viscosity of 12 mPa·s and a particle diameter of 434 nm. (The solid contents was kept at 2 to 4 wt% during solvent substitution.) The resulting 1-propanol dispersion was applied onto a glass plate by using an applicator (which formed a wet film with a thickness of 25 µm). After heating at 110° C for 10 minutes, there was obtained a dry film which had a surface resistivity of 1.7×10⁵ Ω/□.

### Example 5

Deionization was performed on 292 g of the cation-exchanged aqueous colloidal dispersion of polyaniline (which was prepared in Example 4) by passing through a column filled with 300 mL of hydroxyl group form strong base anion exchange resin (IRA-410, from Organo), at 20°C and a space velocity of 10 per hour. Thus there was obtained 464 g of cation-anion-exchanged aqueous colloidal dispersion of polyaniline, which had pH 1.8 and conductivity of 4.7 mS/cm.
In the next step, 150 g of the cation-anion-exchanged aqueous colloidal dispersion (obtained as mentioned above) was placed in an evaporator (with its internal pressure kept at 60 Torr) heated by an external heater at 75°C. For solvent substitution, 0.8 L of 1-propanol was slowly added to the evaporator so that water was substituted by 1-propanol. Thus there was obtained 70 g of 1-propanol dispersion of polyaniline, which contained 3.3 wt% of solids and 0.11 wt% of water and had a viscosity of 12 mPa·s and a particle diameter of 388 nm. (The solid contents was kept at 2 to 4 wt% during solvent substitution.) The resulting 1-propanol dispersion was applied onto a glass plate by using an applicator (which formed a wet film with a thickness of 25 µm). After heating at 110°C for 10 minutes, there was obtained a dry film which had a surface resistivity of 1.5×10⁵ Ω/□.

### Example 6

The first step started with ultrafiltration of a commercial product (500 g) of aqueous colloidal dispersion of poly-3,4-ethylenedioxythiophene (PEDOT) "Baytron-P" (from Bayer) containing 1.3 wt% of solids and having pH 1.7 and conductivity of 7.1 mS/cm. Ultrafiltration was performed at 20°C by using 13.1 kg of water through a membrane with a molecular weight cutoff of 100,000. Thus there was obtained 500 g of filtered aqueous dispersion of PEDOT, which contained 1.3 wt% of solids and had pH 1.9 and conductivity of 4.5 mS/cm.
In the second step, deionization was performed by passing 250 g of the aqueous colloidal dispersion (which was prepared in the first step) through a column filled with 300 mL of hydrogen form strong acid cation exchange resin (IR-120B, from Organo), at 20°C and a space velocity of 10 per hour. Thus there was obtained 493 g of cation-exchanged aqueous colloidal dispersion of PEDOT, which had pH 2.2 and conductivity of 2.1 mS/cm.

In the third step, 150 g of the cation-exchanged aqueous colloidal dispersion was placed in an evaporator (with its internal pressure kept at 60 Torr) heated by an external heater at 75°C. For solvent substitution, 2.0 L of ethanol was slowly added to the evaporator so that water was substituted by ethanol. Thus there was obtained 73 g of ethanol dispersion of PEDOT, which contained 1.3 wt% of solids and 0.24 wt% of water and had a viscosity of 12 mPa·s and a particle diameter of 410 nm. (The solid contents was kept at 2 to 4 wt% during solvent substitution.) The resulting ethanol dispersion was applied onto a glass plate by using an applicator (which formed a wet film with a thickness of 25 µm). After heating at 110°C for 10 minutes, there was obtained a dry film which had a surface resistivity of 5.1×10³ Ω/□.

### Example 7

Solvent substitution was performed as follows on 150 g of the cation-exchanged aqueous colloidal dispersion of PEDOT (which was prepared in Example 6). The sample was placed in an evaporator (with its internal pressure kept at 60 Torr) heated by an external heater at 75°C. The evaporator was slowly given 1.0 L of 1-propanol so that water was removed and substituted by 1-propanol. Thus there was obtained 75 g of 1-propanol dispersion of polythiophene, which contained 1.2 wt% of solids and 0.14 wt% of water and had a viscosity of 640 mPa·s and a particle diameter of 439 nm. (The solid contents was kept at 0.5 to 2 wt% during solvent substitution.) The resulting 1-propanol dispersion was applied onto a glass plate by using an applicator (which formed a wet film with a thickness of 25 µm). After heating at 110°C for 10 minutes, there was obtained a dry film which had a surface resistivity of 4.1×10³ Ω/□.

### Example 8

In the first step, ion exchange was carried out by passing 709 g of aqueous colloidal dispersion of the intrinsically conductive polymer "D1031W" (from ORMECON), which contains 2.2 wt% of solids and has pH 1.8 and conductivity of 6.4 mS/cm, through a column filled with 250 mL of hydrogen form strong acid cation exchange resin (IR-120B, from Organo), at a space velocity of 5 per hour. Thus there was obtained 880 g of cation-exchanged aqueous colloidal dispersion, which contained 1.9 wt% of solids and had pH 1.8 and conductivity of 5.5 mS/cm.
In the second step, the resulting cation-exchanged aqueous colloidal dispersion was concentrated into 515 g by using an evaporator (with its internal pressure kept at 60 Torr) heated by an external heater at 75°C. For solvent substitution, 17 L of methanol was slowly added to the evaporator so that water was substituted by methanol. (The solid contents was kept at 0.5 to 2 wt% during solvent substitution.)
The resulting methanol dispersion was processed by an ultrasonic homogenizer ("US-1200 CCVP" from Nippon Seiki) to give 1340 g of methanol dispersion of the polymer, which contained 1.0 wt% of solids and 0.96 wt% of water and had a viscosity of 3.6 mPa·s and a particle diameter of 105 nm. The methanol dispersion was applied onto a glass plate by using an applicator (which formed a wet film with a thickness of 25 µm). After heating at 110° C for 10 minutes, there was obtained a dry film which had a surface resistivity of 2.9×10³ Ω/□.

### Example 9

In the first step, ion exchange was carried out by passing 703 g of aqueous colloidal dispersion "D1031W" (from ORMECON), which contains 2.2 wt% of solids and has pH 1.8 and conductivity of 6.4 mS/cm, through a column filled with 250 mL of hydrogen form strong acid cation exchange resin (IR-120B, from Organo), at a space velocity of 5 per hour. Thus there was obtained 1011 g of cation-exchanged aqueous colloidal dispersion, which contained 1.5 wt% of solids and had pH 1.9 and conductivity of 4.6 mS/cm.
In the second step, the resulting cation-exchanged aqueous colloidal dispersion was concentrated into 582 g by using an evaporator (with its internal pressure kept at 60 Torr) heated by an external heater at 75°C. For solvent substitution, 9 L of 1-propanol was slowly added to the evaporator so that water was substituted by 1-propanol. (The solid contents was kept at 0.5 to 2 wt% during solvent substitution.)
The resulting 1-propanol dispersion was processed by an ultrasonic homogenizer ("US-1200 CCVP" from Nippon Seiki) to give 1445 g of 1-propanol dispersion, which contained 1.0 wt% of solids and 0.55 wt% of water and had a viscosity of 8.8 mPa·s and a particle diameter of 175 nm. The 1-propanol dispersion was applied onto a glass plate by using an applicator (which formed a wet film with a thickness of 25 µm). After heating at 110°C for 10 minutes, there was obtained a dry film which had a surface resistivity of 8.6×10³ Ω/□.

### Example 10

In the first step, ion exchange was carried out by passing 300 g of aqueous colloidal dispersion "D1031W" (from ORMECON), which contains 1.9 wt% of solids and has pH 1.8 and conductivity of 6.6 mS/cm, through a column filled with 250 mL of hydrogen form strong acid cation exchange resin (IR-120B, from Organo), at a space velocity of 5 per hour. Thus there was obtained 560 g of cation-exchanged aqueous colloidal dispersion, which contained 1.0 wt% of solids and had pH 2.0 and conductivity of 2.9 mS/cm.
In the second step, the resulting cation-exchanged aqueous colloidal dispersion was concentrated into 560 g by using an evaporator (with its internal pressure kept at 60 Torr) heated by an external heater at 75°C. For solvent substitution, 0.3 L of N-methylpyrrolidone was slowly added to the evaporator so that water was substituted by N-methylpyrrolidone. (The solid contents was kept at 1 to 3 wt% during solvent substitution.)
The resulting N-methylpyrrolidone dispersion was processed by an ultrasonic homogenizer ("US-1200 CCVP" from Nippon Seiki) to give 345 g of N-methylpyrrolidone dispersion, which contained 1.6 wt% of solids and 0.99 wt% of water and had a viscosity of 114 mPa·s and a particle diameter of 156 nm. The N-methylpyrrolidone dispersion was applied onto a glass plate by using an applicator (which formed a wet film with a thickness of 25 µm). After heating at 110° C for 10 minutes, there was obtained a dry film which had a surface resistivity of 1.7×10³ Ω/□.

### Example 11

In the first step, ion exchange was carried out by passing 261 g of aqueous colloidal dispersion of the intrinsically conductive polymer "D1032W" (from ORMECON), which contains 1.3 wt% of solids and has pH 2.1 and conductivity of 3.9 mS/cm, through a column filled with 250 mL of hydrogen form strong acid cation exchange resin (IR-120B, from Organo), at a space velocity of 2 per hour. Thus there was obtained 503 g of cation-exchanged aqueous colloidal dispersion of the polymer, which contained 0.6 wt% of solids and had pH 2.3 and conductivity of 2.1 mS/cm.
In the second step, the resulting cation-exchanged aqueous colloidal dispersion was concentrated into 266 g by using an evaporator (with its internal pressure kept at 60 Torr) heated by an external heater at 75°C. For solvent substitution, 8.5 L of methanol was slowly added to the evaporator so that water was substituted by methanol. (The solid contents was kept at 0.5 to 2 wt% during solvent substitution.)
The resulting methanol dispersion was processed by an ultrasonic homogenizer ("UIP 2000" from Dr. Hielscher) to give 145 g of methanol dispersion, which contained 1.0 wt% of solids and 0.86 wt% of water and had a viscosity of 1.5 mPa·s and a particle diameter of 283 nm. The methanol dispersion was applied onto a glass plate by using an applicator (which formed a wet film with a thickness of 25 µm). After heating at 110°C for 10 minutes, there was obtained a dry film which had a surface resistivity of 1.6×10³ Ω/□.

### Example 12

In the first step, ion exchange was carried out by passing 400 g of aqueous colloidal dispersion "D1032W" (from ORMECON), which contains 1.3 wt% of solids and has pH 2.1 and conductivity of 3.9 mS/cm, through a column filled with 250 mL of hydrogen form strong acid cation exchange resin (IR-120B, from Organo), at a space velocity of 2 per hour. Thus there was obtained 740 g of cation-exchanged aqueous colloidal dispersion, which contained 0.7 wt% of solids and had pH 2.3 and conductivity of 2.6 mS/cm.
In the second step, the resulting cation-exchanged aqueous colloidal dispersion was concentrated into 286 g by using an evaporator (with its internal pressure kept at 60 Torr) heated by an external heater at 75°C. For solvent substitution, 5 L of 1-propanol was slowly added to the evaporator so that water was substituted by 1-propanol. (The solid contents was kept at 0.5 to 2 wt% during solvent substitution.)
The resulting 1-propanol dispersion was processed by an ultrasonic homogenizer ("UIP 2000" from Dr. Hielscher) to give 409 g of 1-propnaol dispersion, which contained 1.0 wt% of solids and 0.38 wt% of water and had a viscosity of 15.5 mPa·s and a particle diameter of 103 nm. The 1-propaneol dispersion was applied onto a glass plate by using an applicator (which formed a wet film with a thickness of 25 µm). After heating at 110°C for 10 minutes, there was obtained a dry film which had a surface resistivity of 3.0×10³ Ω/□.

### Example 13

In the first step, ion exchange was carried out by passing 113 g of aqueous colloidal dispersion "D1032W" (from ORMECON), which contains 1.4 wt% of solids and has pH 2.0 and conductivity of 3.8 mS/cm, through a column filled with 250 mL of hydrogen form strong acid cation exchange resin (IR-120B, from Organo), at a space velocity of 2 per hour. Thus there was obtained 443 g of cation-exchanged aqueous colloidal dispersion, which contained 0.4 wt% of solids and had pH 2.6 and conductivity of 0.9 mS/cm.
In the second step, the resulting cation-exchanged aqueous colloidal dispersion underwent solvent substitution in an evaporator (with its internal pressure kept at 60 Torr) heated by an external heater at 75°C. For solvent substitution, 0.1 L of N-methylpyrrolidone was slowly added to the evaporator so that water was substituted by N-methylpyrrolidone. (The solid contents was kept at 0.5 to 2 wt% during solvent substitution.)
The resulting N-methylpyrrolidone dispersion was processed by an ultrasonic homogenizer ("US-1200 CCVP" from Nippon Seiki) to give 345 g of N-methylpyrrolidone dispersion, which contained 1.0 wt% of solids and 0.93 wt% of water and had a viscosity of 13 mPa·s and a particle diameter of 337 nm. The N-methylpyrrolidone dispersion was applied onto a glass plate by spin coating (at 1000 rpm). After heating at 110°C for 10 minutes, there was obtained a dry film which had a surface resistivity of 4.0×10³ Ω/□ .

### Comparative Example 1

Solvent substitution was performed on 100 g of aqueous colloidal dispersion of polyaniline "D1012 W-1" (from ORMECON), which contains 3.9 wt% of solids and has pH 2.7 and conductivity of 15.6 mS/cm, by using an evaporator (with its internal pressure kept at 60 Torr) heated by an external heater at 75°C. For solvent substitution, 1-propanol was slowly added to the evaporator so that water was substituted by 1-propanol. (The solid contents was kept at 2 to 4 wt% during solvent substitution.) Uniform 1-propanol dispersion was not obtained because a large amount of aggregate occurred during solvent substitution and the phase separated into two layers.

### Comparative Example 2

Ultrafiltration (with a molecular weight cutoff of 100,000) was performed on 2.00 kg of aqueous colloidal dispersion of polyaniline "D1012 W-1" (from ORMECON), which contains 3.9 wt% of solids and has pH 2.7 and conductivity of 15.6 mS/cm, by using 131 kg of water. There was obtained 1.86 kg of filtered aqueous colloidal dispersion, which contained 3.51 wt% of solids and had pH 2.0 and conductivity of 6.2 mS/cm. The filtered aqueous colloidal dispersion was diluted so that the resulting product contained 3.1 wt% of solids and had pH 2.2 and conductivity of 5.0 mS/cm.

The thus obtained aqueous dispersion (104 g) underwent solvent substitution in an evaporator (with its internal pressure kept at 60 Torr) heated by an external heater at 75°C. For solvent substitution, 1.0 L of 1-propanol was slowly added to the evaporator so that water was substituted by 1-propanol. (The solid contents was kept at 2 to 4 wt% during solvent substitution.) There was obtained 119 g of 1-propanol dispersion of polyaniline, which contained 3.2 wt% of solids and 0.14 wt% of water and had a viscosity of 33 mPa·s and a particle diameter of 841 nm. This 1-propanol dispersion was applied onto a glass plate by using an applicator (which formed a wet film with a thickness of 25 µm). After heating at 110°C for 10 minutes, there was obtained a dry film which had a surface resistivity of 3.5×10⁵ Ω/□. The dispersion obtained in this comparative example (which was prepared only by ultrafiltration) has a larger particle diameter and a larger surface resistivity (when formed into a thin film on a glass plate) than the 1-propanol dispersion obtained in Examples 3 and 5.

### Comparative Example 3

A sample (215 g) of aqueous colloidal dispersion of poly-3,4-ethylenedioxythiophene (PEDOT) "Baytron-P" (from Bayer), which contains 1.3 wt% of solids and has pH 1.7 and conductivity of 7.1 mS/cm, underwent ion exchange by mixing for 8 hours with 10 g of hydrogen form strong acid cation exchange resin (IR-120B, from Organo) and 10 g of hydroxyl group form strong base anion exchange resin (IRA-410, from Organo).
After removal of the ion exchange resins, there was obtained 206 g of cation-anion-exchanged aqueous colloidal dispersion of PEDOT, which had pH 2.0 and conductivity of 6.0 mS/cm.
The resulting product underwent solvent substitution in an evaporator (with its internal pressure kept at 60 Torr) heated by an external heater at 75°C. For solvent substitution, 9.0 L of methanol was slowly added to the evaporator so that water was substituted by methanol. (The solid contents was kept at 0.5 to 2 wt% during solvent substitution.) Uniform methanol dispersion was not obtained because a large amount of aggregate occurred during solvent substitution and the phase separated into two layers.

## Claims

1. A method for producing an organic solvent dispersion of an intrinsically conductive polymer which comprises a step of deionizing an aqueous colloidal dispersion of an intrinsically conductive polymer by the passing of liquid, thereby clearing the intrinsically conductive polymer of cations adhering thereto, and a subsequent step of substituting water in the aqueous colloidal dispersion by an organic solvent.

2. A method for producing an organic solvent dispersion of an intrinsically conductive polymer as defined in claim 1, wherein deionization is accomplished by ion exchange.

3. A method for producing an organic solvent dispersion of an intrinsically conductive polymer as defined in claim 1, wherein the aqueous colloidal dispersion of an intrinsically conductive polymer undergoes ultrafiltration before deionization.

4. A method for producing an organic solvent dispersion of an intrinsically conductive polymer as defined in claim 1, wherein solvent substitution is accomplished in such a way as to keep the solid contents in a range of 0.05 to 10.0 wt%.

5. A method for producing an organic solvent dispersion of an intrinsically conductive polymer as defined in claim 1, wherein solvent substitution is accomplished in such a way as to reduce the water content below 1%.

6. A method for producing an organic solvent dispersion of an intrinsically conductive polymer as defined in claim 1, wherein solvent substitution is accomplished by slowly adding said organic solvent to said aqueous colloidal dispersion, thereby removing water.

7. A method for producing an organic solvent dispersion of an intrinsically conductive polymer as defined in claim 1, wherein said organic solvent is an alcohol with a carbon number of 1 to 3 or N-methylpyrrolidone.

8. A method for producing an organic solvent dispersion of an intrinsically conductive polymer as defined in claim 1, wherein said intrinsically conductive polymer is doped polyaniline, doped polythiophene, a mixture thereof or a copolymer thereof.

9. An organic solvent dispersion of an intrinsically conductive polymer which is obtained by the method defined in any of claims 1 to 8.

10. An organic solvent dispersion of an intrinsically conductive polymer in which the water content is less than 1 wt%.

11. An organic solvent dispersion of an intrinsically conductive polymer as defined in claim 11, wherein said intrinsically conductive polymer is doped polyaniline or doped polythiophene, a mixture thereof or a copolymer thereof.
